# EUROPÄISCHE PATENTSCHRIFT

(11) **EP 1 655 937 B1**
(45) Date of publication and mention of the grant of the patent: **16.10.2013**
(21) Application number: 05023949.0
(22) Date of filing: 03.11.2005
(51) Int. Cl.: H04M 7/00, H04L 29/06

(54) **Method and system control for setting up an IP telephony connection**
Verfahren und Systemsteuerung für den Aufbau einer IP-Telefonieverbindung
Procédé et système de commande pour l'établissement d'une connexion téléphonique par Internet

(30) Priority: 05.11.2004 DE 102004053928
(43) Date of publication of application: 10.05.2006
(73) Proprietor: Avaya-Tenovis GmbH & Co. KG, 60326 Frankfurt (DE)
(72) Inventor: Kayser, Udo, 42285 Wuppertal (DE); Rodewald, Frank, 50181 Bedburg (DE)
(74) Representative: Tergau & Walkenhorst

(56) References cited:
- WO-A-2004/017161
- US-A1- 2001 010 690

## Description

The invention relates to a method and system control for the setup of an IP telephony connection between terminals in an IP network, controlled by a branch exchange which is also connected to the IP network. A branch exchange comprises at least one gateway, and several terminals are allocated to one gateway.

In the Internet telephony over IP networks (voice over IP networks), branch exchanges and other technical devices (terminals) are connected with each other through special gateways over the Internet or an Intranet, so that it is possible to make calls over the IP network from a conventional telephone to another conventional telephone using the normal telephone number and possibly a special Internet access code. For the user of the conventional telephone, the utilization of the IP network is hidden.

According to the state of the art, in the Internet telephony (voice over IP, VoIP), an IP terminal functioning according to an Internet protocol (IP) (IP terminal) is allocated, like every conventional ISDN terminal, in addition to its IP address, a directory number assigned within the branch exchange to which this terminal is allocated, through a directory-number plan, to a fixed hardware address (HWA). The Internet-telephony interface (VoIP board, applicant's product name, here synonymous to gateway) behaves, as seen by the (software for the) exchange, like an assembly with non IP terminals, i.e. the terminal is fixedly allocated to an HWA. This is realized by converting the HWA transmitted, upon setup of the connection, to the gateway (VoIP board) into an IP address with which the gateway (VoIP board) sets up the connection over the IP network (LAN) to the IP terminal. In the opposite direction (i.e. as seen by the terminal setting up the connection), the terminal sets up, over the IP address of the gateway stored in the terminal, the connection to this gateway and thus to the branch exchange. That means that there is an unambiguous allocation between terminal and gateway.

As the connection is in general switched over two different gateways (VoIP boards), the data flow (media stream) must as a rule be switched over a switching matrix of the branch exchange. In the switching matrix or switching network of the branch exchange, incoming and outgoing lines or channels are connected with each other in conformity with control data.

When connecting terminals over two different gateways (VoIP boards), there are two transcoding operations, namely, on the one hand, the transcoding from IP coding to ISDN coding and, on the other hand, the transcoding from ISDN coding to IP coding. Only if the calling and the called terminals are allocated to the same VoIP board, will it be possible to switch the data flow (media stream) on the assembly, i.e. without the switching matrix of the branch exchange, and the transcodings are omitted.

furthermore, the number of IP terminals (IP phones) allocated to one gateway (VoIP board) is often clearly larger than the capacity of a gateway (VoIP board) for the control of connections.
Related systems are kown from US 2001/010690 A1 and WO 2004/017161 A.

It is the object of the invention to create a method and a system control with which the above-mentioned shortcomings of the prior art can be avoided and the availability of the overall system for each IP terminal and thus the voice quality of the IP-telephony connection can be enhanced.

This object is achieved according to the invention through the method according to claim 1 and the system control according to claim 7, respectively. Preferred embodiments of the invention are the subject matter of the dependent claims.

The idea of the invention is based on a flexible, i.e. connection-related, allocation of IP terminals to gateways (VoIP boards), in order to avoid the switching of the data flow over the switching matrix of the branch exchange. For this purpose, all gateways (VolP boards) of one branch exchange are combined in a pool. In addition, all IP terminals allocated to this branch exchange are allocated, through the directory-number plan, to one pseudo hardware address. This pseudo hardware address has the same format as a conventional hardware address, however, according to the invention, there exists no longer a physical port in the branch exchange, which is allocated to this hardware address. If upon setup of a connection, such a pseudo hardware address is determined, the connection will be set up over any other gateway of the branch exchange. Preferably, the gateway (VoIP board) over which the calling terminal (if the latter is also an IP terminal) sets up the connection will be used. If this is not possible because that gateway does not have any spare traffic-handling capacities, the connection will be set up over another gateway, preferably the one with the lowest capacity utilisation.

The method according to the invention for setting up an IP telephony connection between an original terminal and a destination terminal among several terminals in an IP network through one of several gateways of a branch exchange comprises the following steps: setting up a connection between the original terminal and a first gateway, the original terminal selecting the first gateway from several gateways by means of a list of IP addresses, setting up a connection between the original terminal and a first gateway, the original terminal selecting the first gateway from the several gateways by means of a list of IP addresses, verification whether the first gateway has any spare traffic-handling capacities and, if the first gateway has spare traffic-handling capacities, setting up a connection between the first gateway and the destination terminal. Preferably, if the first gateway is found not to have any spare traffic-handling capacities, a second gateway of the branch exchange with spare traffic-handling is selected, a connection between the first gateway and the second gateway through a system control of the branch exchange is set up, and a connection between the second gateway and the destination terminal is set up.

In other words: the gateways used for establishing the contact between the terminals are selected in view of availability or capacity aspects. If possible in view of these aspects, the first gateway, to which contact from the original terminal is made using the list of IP addresses, is also used for establishing contact to the destination terminal, thus establishing a communication channel requiring one gateway only. If due to capacity aspects this is not possible, an appropriate second gateway is selected for establishing the communication channel to the destination terminal.

Preferably, the method possesses one or several of the following features individually or in combination:
determination and definition of the second gateway comprises: verification whether the first gateway has any spare traffic-handling capacities and definition of the first gateway as being at the same time the second gateway, if the first gateway has spare traffic-handling capacities, so that the connection between the first gateway and the second gateway is a gateway-internal connection, and
search for a gateway with spare traffic-handling capacities, and definition of the gateway as being the second gateway, if the first gateway does not have any spare traffic-handling capacities;
determination of the IP address of the original terminal and the destination terminal and respective conversion into a pseudo hardware address as a function of the gateway, and connection of an input and an output in a switching matrix in the system control in accordance with the pseudo hardware address of the original terminal and the destination terminal, respectively;
the IP address is converted into a pseudo hardware address through a data-flow control unit in the system control, and spare traffic-handling capacities of the (first and) second gateways are determined through a call control;
the pseudo hardware address has the same format as a conventional hardware address (the pseudo hardware address can be distinguished from conventional hardware addresses e.g. by using value areas reserved for it);
the pseudo hardware address is transmitted to the call control as being the sender's address and through it, configuration data of the original terminal are registered by the call control.

The system control according to the invention in a branch exchange for setting up an IP-telephony connection between an original terminal and a destination terminal among several terminals in an IP network, over one of several gateways of a branch exchange comprises: a data-flow control unit for converting the IP address of an original terminal or a destination terminal, respectively, into a pseudo hardware address, and a call control for determining a gateway of the branch exchange having spare traffic-handling capacities, and for connecting an input with an output in a switching matrix as a function of the pseudo hardware address of the original terminal and the destination terminal and of the gateway, for the duration of the connection.

In particular, the data-flow control comprises an MSC address table with an allocation between IP address and pseudo hardware address, the pseudo hardware address having the same format as a conventional hardware address.

The application of the invention offers, among others, the following advantages. As, according to the invention, the gateway (VolP board) is allocated to the IP terminal (IP phone) for the duration of one connection only, each gateway (VoIP board) can now be used for each IP terminal (IP phone) so that the availability of each IP terminal (IP phone) in the total system is increased.

The method according to the invention is not limited to branch exchanges with several gateways (VoIP boards). That means that it is not necessary to have two different implementations of a branch exchange, one of them enabling the operation of a branch exchange with several gateways (VoIP boards) and the other, the operation of a branch exchange with a single gateway (VoIP board).

In addition to the advantage that no transcoding operations are necessary (this applies to the use of different Codecs or the capacity utilisation of a VolP board and to the improvement of the voice quality (QoS: Quality of Service)), the availability of the overall system for each IP terminal (IP phone) is increased. The switching software can remain almost unchanged, only slight modifications have to be carried out on the VoIP boards for implementing the invention.

Further advantages and features of the invention will become evident from the following description of preferred embodiments, with reference to the enclosed drawings.
- Fig. 1: shows a branch exchange on an IP network with several terminals according to the state of the art for a first communication path.
- Fig. 2: shows a branch exchange on an IP network with several terminals according to the state of the art for a second communication path.
- Fig. 3: shows a branch exchange according to the invention on an IP network with several terminals for a third communication path.
- Fig. 4: shows a branch exchange according to the invention on an IP network with several terminals for a fourth communication path.

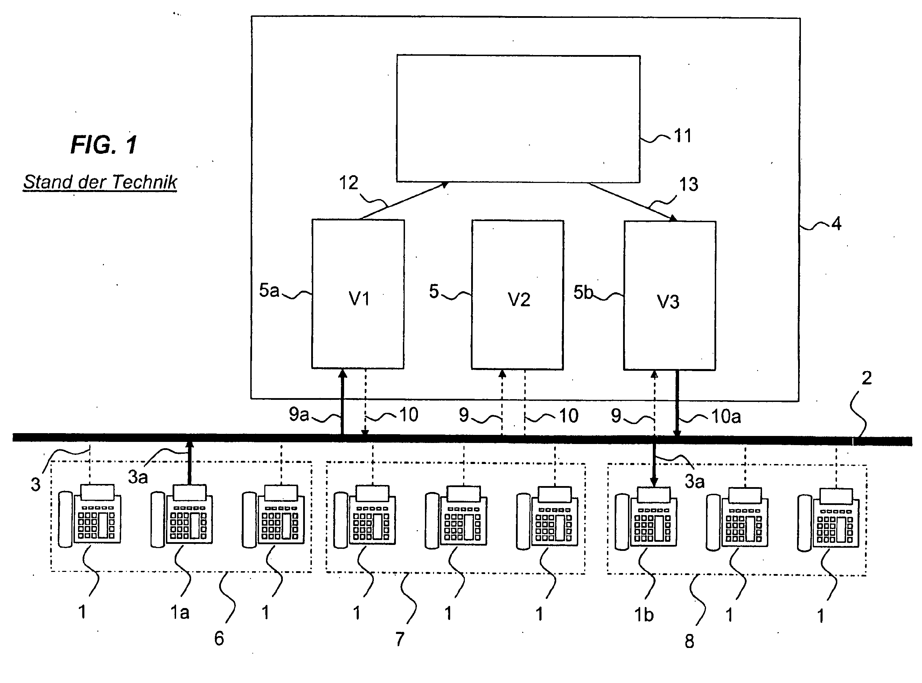

Figure 1 shows the structure of an IP network with several terminals 1 on an LAN 2 with which they are connected through connection lines 3. In the figures, connections are in general represented in dotted lines, whereas active connections are represented in continuous lines, and their reference number has always the supplement "a".

The terminals 1 are connected to a branch exchange 4 comprising several gateways (VoIP assemblies or VolP boards) 5. Each gateway 5 is adapted for a group of terminals. The gateway 5 V1, for example, is adapted for the terminals 1 combined in a first group 6, the gateway 5 V2 is adapted for the terminals 1 combined in a second group 7, and the gateway 5 V3 is adapted for the terminals 1 combined in a third group 8.

As to the IP terminals 1 of the first group 6, the IP address of the gateway 5 V1 is stored in the individual IP terminals 1 of the first group 6. Equally, concerning the IP terminals 1 of the second group 7, the IP address of the gateway 5 V2 is stored in the individual IP terminals 1 of the second group 7 and, concerning the IP terminals 1 of the third group 8, the IP address of the gateway 5 V3 is stored in the individual IP terminals 1 of the third group 8. Each of the gateways 5 possesses a fixed number of switchable channels 9 or 10, channel 9 being the one in which the gateway 5 is the gateway of the original terminal 1a (gateway upstream from the terminal) and channel 10 being the one in which gateway 5 is the gateway of the destination terminal (terminal upstream from the gateway). Each of these channels has a fixed hardware address, as seen by the branch exchange.

Fig. 1 shows a first communication process in which the original terminal 1a dials the directory number of a destination terminal 1b, which belongs to another group of terminals, in the example shown, to group 8. First, over the IP address stored in the original terminal 1a, the connection 3a, 9a to the gateway 5a V1 is set up, and from there, over a channel 12, to a call-control software containing a switching matrix 11. The call control determines the hardware address associated with the dialled directory number of the destination terminal 1 b. This hardware address leads to the gateway 5b and through the connection 10a, 3a, to the terminal 1 b. As the connection is switched over two different gateways, the data flow (media stream) must be switched over the switching matrix 11 of the branch exchange 4, i.e., there are two transcoding operations, namely from IP coding to ISDN coding and vice versa, from ISDN coding to IP coding. In the switching matrix 11, incoming and outgoing lines or channels are connected with each other in conformity with control data.

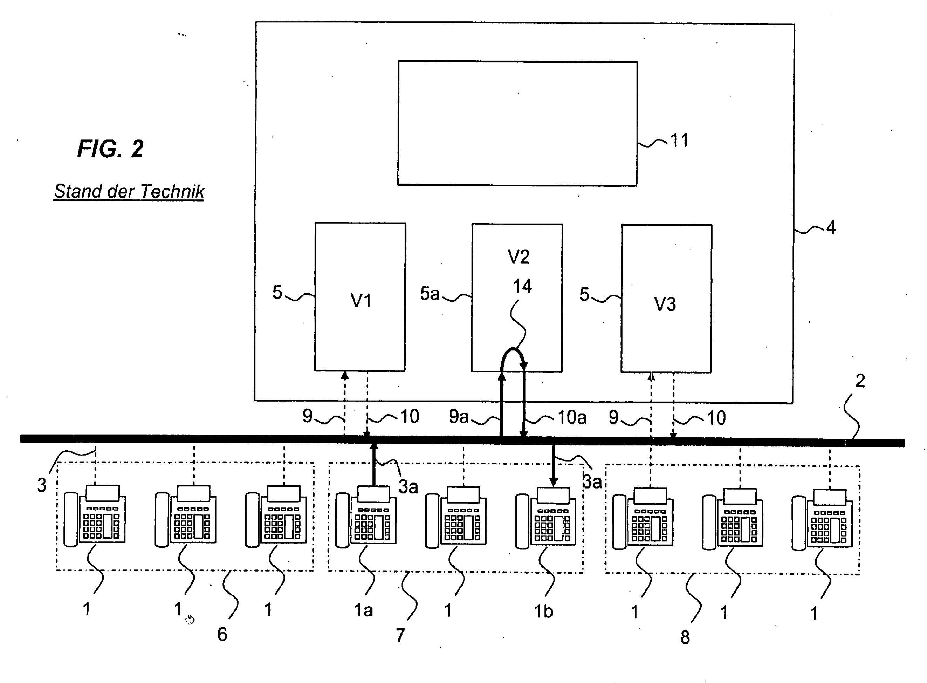

Fig. 2 shows the layout according to Fig. 1 for the case that the two terminals 1 a and 1 b communicating with each other are connected to the same gateway 5a. Identical components as in Fig. 1 are marked with the same reference numbers as in Fig. 1. When the two involved terminals 1 a and 1 b belong to the same group (in this case, 7) and are, therefore, supplied by the same gateway 5a, it is not necessary to transmit the data from the gateway 5 to the call-control software and to store the call parameters. In this case, the entire voice/data traffic can be regulated in the gateway 5a, which is the only one involved in the communication connection, so that only an internal routing onward from port 9a to port 10a over an internal loop 14 is necessary. Therefore, in this case, no transcoding is necessary at all. It has to be noted, however, that such a constellation will only occur in a fraction of all possible cases, if the branch exchange 4 possesses more than one gateway 5. In the state of the art shown in Fig. 1 and in Fig. 2, there are practically rigid tunnels between one gateway 5 and the IP terminals 1 allocated to it. As soon as two IP terminals 1 involved in a connection are allocated to different gateways 5, the data flow has to be directed over the switching matrix 11 of the branch exchange, so that two transcoding operations become necessary.

Although the relation between the number of IP terminals (IP phones) 1 allocated to one gateway 5 and the connection capacity of the gateway 5 is the result of traffic-theoretical computations, the IP terminals 1 according to this state of the art are often unable, in case of load, to set up connections or cannot be reached by others, whereas at the same time other gateways 5 of the same branch exchange 4 might not be fully utilised.

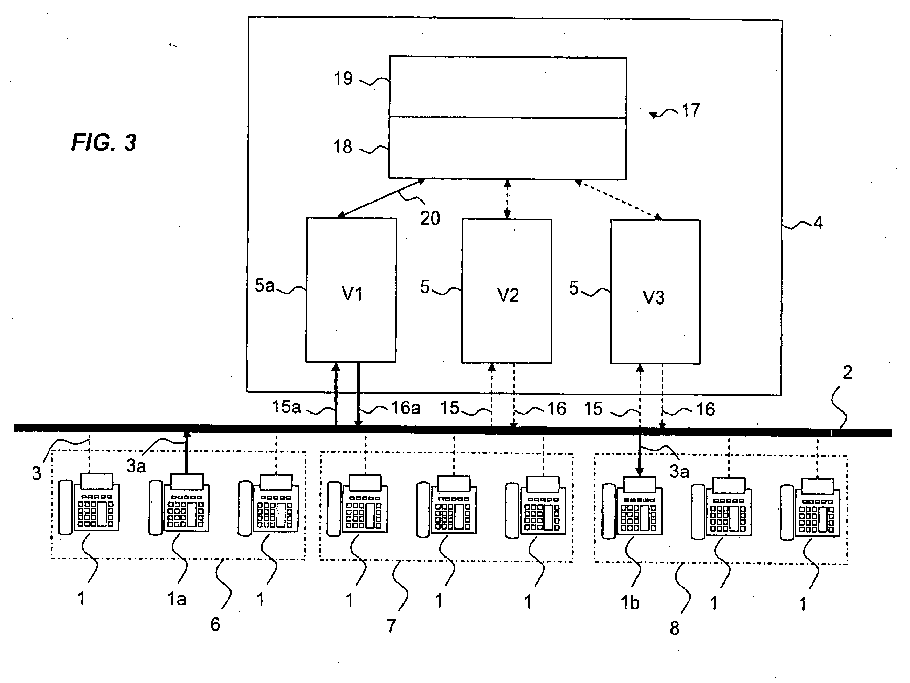

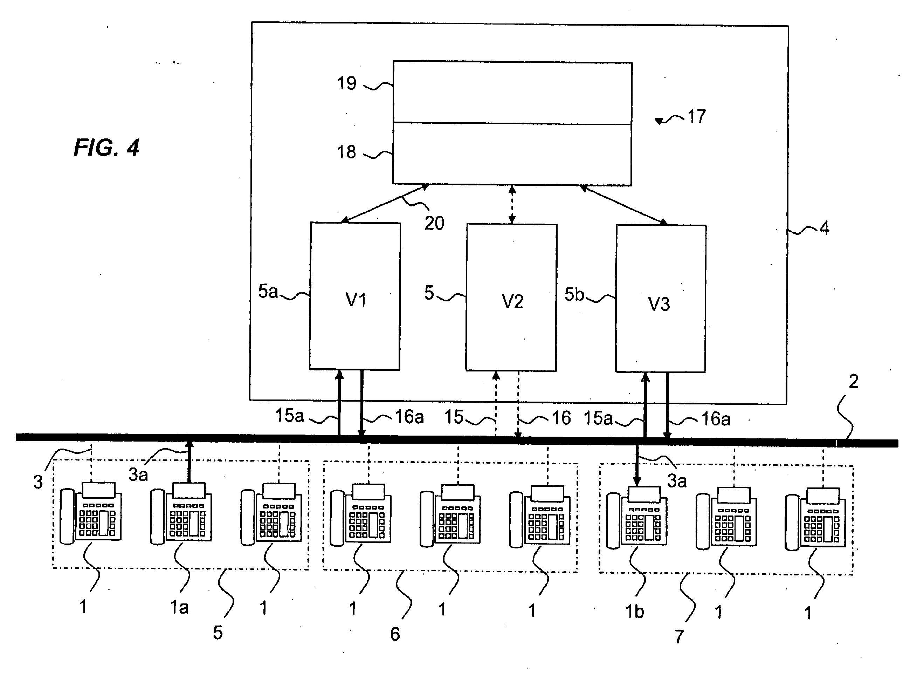

The following is a description of the method according to the invention with reference to Figures 3 and 4.

According to the invention, a list of the IP addresses of the gateways 5 of the branch exchange 4 is stored in each IP terminal 1. A subdivision of the terminals 1 into groups 6, 7, 8 as well as the rigid allocation of one gateway 5 to each of these groups is, therefore, no longer necessary with the invention, because every terminal 1 can access every gateway 5 through the latter's IP address. The setup of a connection will in the following be described with reference to the example shown in Fig. 3, in which the original terminal 1 a sets up the connection over the gateway 5a. The original terminal 1a dials the directory number of the destination terminal 1b. First, the gateway 5a is selected by means of the IP address list stored in the original terminal 1a, the connection to the gateway 5a is set up and, from there, over a bidirectional connection 20, routed onward to a system control 17. The system control 17 consists of the call-control software 19 and a data-flow control 18, which according to the invention represents a new functional unit (media-stream control, MSC).

The IP address of the original terminal 1a is transmitted to the data-flow control MSC 18 and is translated there, over an MSC address table, into the pseudo hardware address allocated to the original terminal 1a. This pseudo hardware address has the same format as a conventional hardware address, but there exists no physical port in the branch exchange associated with this hardware address.

The following Table 1 is an example for an MSC address table.

**Table 1**

| IP address | (Pseudo) hardware address |
|---|---|
| 123.456.789.11 | HWA1 |
| 123.456.789.12 | HWA2 |
| 123.456.789.13 | HWA3 |
| 123.456.789.14 | HWA4 |
| 123.456.789.15 | HWA5 |
| 123.456.789.16 | HWA6 |
| 123.456.789.17 | HWA7 |
| 123.456.789.18 | HWA8 |
| 123.456.789.19 | HWA9 |

The left-hand column contains the IP addresses, and in the right-hand column, the associated pseudo hardware addresses are listed.

The pseudo hardware address of the original terminal 1a is transmitted in a setup message (first connection-setup message) as the sender's address to the call control 19. Over the pseudo hardware address, the call control 19 can read the configuration data of the original terminal 1a, like in the case of a conventional hardware address.

From the directory-number plan, in which each directory number of an IP terminal 1 is allocated a pseudo hardware address, the hardware address associated with the dialled directory number of the destination terminal 1 b is determined. If this address is, like in this example, a pseudo hardware address, the going setup is not transmitted to an assembly, but to the data-flow control MSC 18.

The following Table 2 is an example for a directory-number plan.

**Table 2**

| Directory number | (Pseudo) hardware address |
|---|---|
| 4711 (first terminal of group 6) | HWA1 |
| 4712 (second terminal of group 6) | HWA2 |
| 4713 (third terminal of group 6) | HWA3 |
| 5030 (first terminal of group 7) | HWA4 |
| 5191 (second terminal of group 7) | HWA5 |
| 5274 (third terminal of group 7) | HWA6 |
| 6123 (first terminal of group 8) | HWA7 |
| 5456 (second terminal of group 8) | HWA8 |
| 5789 (third terminal of group 8) | HWA9 |

The left-hand column of Table 2 contains the directory numbers of the first, second, third terminals 1 of group 6, of the first, second, third terminals 1 of group 7, and of the first, second, third terminals 1 of group 8, in the right-hand column, the associated pseudo hardware addresses are indicated.

The data-flow control MSC 18 can determine, with the help of Table 1 and a gateway allocation table (Table 4) described below, by means of the sender's pseudo hardware address of the original terminal 1a, the allocated gateway 5a, and can determine, with the help of a gateway load table (Table 3) described below, whether the gateway 5a still has some free (switchable) channels.

The following Table 3 is an example for the gateway load table in the data-flow control MSC 18.

**Table 3**

| Gateway | Available channels | Free channels |
|---|---|---|
| V1 | 30 | 20 |
| V2 | 30 | 24 |
| V3 | 30 | 10 |

For each gateway 5, the number of free channels and - preferably - the number of available channels is listed.

The following Table 4 is an example for a gateway allocation table in the data-flow control MSC 18.

**Table 4**

| IP address | Gateway |
|---|---|
| 123.456.789.11 | V1 |
| 123.456.789.12 | V1 |
| 123.456.789.13 | V1 |
| 123.456.789.14 | V2 |
| 123.456.789.15 | V2 |
| 123.456.789.16 | V2 |
| 123.456.789.17 | V3 |
| 123.456.789.18 | V3 |
| 123.456.789.19 | V3 |

For each IP address, a gateway 5 is listed, whereby, of course, the allocation need not necessarily be reversibly unambiguous.

By means of the above tables, the data-flow control MSC 18 can determine whether the gateway 5a has free (switchable) channels. If so, the setup message will be passed on to the gateway 5a, if not, it will be determined by means of the same table which gateway 5 has the lowest load, i.e. the largest number of free channels. The setup message will then be sent to that gateway. In the example in Table 3 and in Fig. 3, the gateway 5a has a total of 30 available channels, 20 of which are still free. In order to avoid, as explained above, a double transcoding, the connection between the branch exchange 4 and the destination terminal 1 b is, therefore, handled over this gateway 5a, as it has enough spare capacities. Only after the gateway 5a is completely utilised, will an alternative gateway be searched. The setup message sent to the gateway 5a contains the IP address of the destination terminal 1 b, which is determined by the MSC by means of the pseudo hardware address of destination (1 b) (see Table 1). The gateway 5b sets up the connection to the terminal 1b with this IP address.

In another example, shown in Fig. 4, the capacity of the gateway 5a selected by the original terminal 1a is fully utilized. Therefore, it rejects the inquiry of the system control 17 for setup of a connection. The system control 17 starts further attempts to other gateways 5. In the example shown in Fig. 4, the gateway 5b has the lowest load, i.e. the largest number of free channels. Accordingly, the setup message is sent to this gateway.

If the capacity of all gateways 5 is fully utilized, the connection setup will be interrupted. Otherwise, the connection will be setup over the first available gateway found, in the above-described way.

Thus, to increase the availability of the overall system for each IP terminal and to enhance in this way the voice quality of the IP-telephony connection, the setup of a connection between the original terminal and a first gateway is effected, according to the invention, by means of a list of IP addresses, a connection between the first gateway and a second gateway is set up by a system control of the branch exchange, and a connection between the second gateway and the destination terminal is effected by the second gateway, the setup of the connection between the first gateway and the second gateway by the system control comprising the determination of a gateway with spare traffic-handling capacities among the several gateways of the branch exchange and the definition of this gateway as being the second gateway.

### Reference Numerals

- 1: IP terminal
- 2: IP network (LAN)
- 3: Connection of IP terminal with LAN
- 4: Branch exchange
- 5: Gateway in branch exchange, 5a and 5b active gateways
- 6: First group of IP terminals
- 7: Second group of IP terminals
- 8: Third group of IP terminals
- 9: Hardware connection IP terminal - gateway, 9a active hardware connection
- 10: Hardware connection gateway - IP terminal, 10a active hardware connection
- 11: Switching matrix
- 12: Link "input" of gateway with switching matrix
- 13: Link "output" of gateway with switching matrix
- 14: Internal loop in gateway without transcoding
- 15: Pseudo hardware connection original terminal - gateway, 15a active pseudo hardware connection
- 16: Pseudo hardware connection gateway - original terminal, 15a active pseudo hardware connection
- 17: System control
- 18: Data-flow control
- 19: Call control
- 20: Bidirectional connection gateway - data-flow control

## Claims

1. Method for the setup of an IP telephony connection between an original terminal (1 a) and a destination terminal (1 b) among several terminals (1) in an IP network (2) over one of several gateways (5) of a branch exchange (4) **characterized by** the steps:
- setting up a connection between the original terminal (1a) and a first gateway (5a), the original terminal (1a) selecting the first gateway (5a) from the several gateways (5) by means of a list of IP addresses,
- verification, by a data-flow control unit (18) of the branch exchange (4), whether the first gateway (5a) has any spare traffic-handling capacities and, if the first gateway (5a) has spare traffic-handling capacities,
- setting up a connection between the first gateway (5a) and the destination terminal (1b).

2. Method according to claim 1, **characterized by** the further steps:
- if the first gateway (5a) is found not to have any spare traffic-handling capacities, searching for a second gateway (5b) of the branch exchange (4) with spare traffic-handling
- setting up a connection between the first gateway (5a) and the second gateway (5b) through a system control (17) of the branch exchange (4), and
- setting up a connection between the second gateway (5b) and the destination terminal (1b).

3. Method according to claim 1 or 2, **characterized by** the steps:
- determination of the IP address of the original terminal (1a) and the destination terminal (1b) and respective conversion into a pseudo hardware address as a function of the gateway (5) and
- connection of an input and an output in a switching matrix (11) in the system control (17) in accordance with the pseudo hardware address of the original terminal or the destination terminal.

4. Method according to claim 3, **characterized by**
- the IP address is converted into a pseudo hardware address through a data-flow control unit (18) in the system control (17) and
- spare traffic-handling capacities of the first and second gateways (5a; 5b) are determined by a call control (19).

5. Method according to claim 3 or 4, **characterized by**
the pseudo hardware address has the same format as a conventional hardware address.

6. Method according to any of claims 3 to 5, **characterized by**
the pseudo hardware address is transmitted to the call control (19) as the sender's address and, over it, configuration data of the original terminal are registered by the call control (19).

7. System control in a branch exchange for setting up an IP telephony connection between an original terminal (1 a) and a destination terminal (1 b) among several terminals (1) in an IP network (2) over one of several gateways (5) of a branch exchange (4), **characterized by**:
- a data-flow control unit (18), and
- a call control (19),
the data-flow control unit (18) and the call control (19) comprising means for carrying out the method according to any of claims 1 to 6.

8. System control according to claim 7, **characterized by**
the data-flow control (18) comprises an address table with an allocation between an IP address and a pseudo hardware address, the pseudo hardware address having the same format as a conventional hardware address.

## Patentansprüche

1. Verfahren zum Aufbau einer IP-Telefonieverbindung zwischen einem Ursprungsendgerät (1 a) und einem Bestimmungsendgerät (1 b) unter mehreren Endgeräten (1) in einem IP-Netz (2) über eine von mehreren Überleiteinrichtungen (5) einer Nebenstellenanlage (4), **gekennzeichnet durch** die Schritte:
- Aufbauen einer Verbindung zwischen dem Ursprungsendgerät (1 a) und einer ersten Überleiteinrichtung (5a), wobei das Ursprungsendgerät (1a) die erste Überleiteinrichtung (5a) aus den mehreren Überleiteinrichtungen (5) anhand einer Liste von IP-Adressen auswählt,
- Verifizieren **durch** eine Datenflusssteuerungseinheit (18) der Nebenstellenanlage (4), ob die erste Überleiteinrichtung (5a) über übrige Verkehrsabwicklungskapazitäten verfügt, und, falls die erste Überleiteinrichtung (5a) über übrige Verkehrsabwicklungskapazitäten verfügt,
- Aufbauen einer Verbindung zwischen der ersten Überleiteinrichtung (5a) und dem Bestimmungsendgerät (1 b).

2. Verfahren nach Anspruch 1, **gekennzeichnet durch** die weiteren Schritte:
- falls festgestellt wird, dass die erste Überleiteinrichtung (5a) über keine übrigen Verkehrsabwicklungskapazitäten verfügt, Suchen einer zweiten Überleiteinrichtung (5b) der Nebenstellenanlage (4) mit übriger Verkehrsabwicklungskapazität,
- Aufbauen einer Verbindung zwischen der ersten Überleiteinrichtung (5a) und der zweiten Überleiteinrichtung (5b) über eine Systemsteuerung (17) der Nebenstellenanlage (4), und
- Aufbauen einer Verbindung zwischen der zweiten Überleiteinrichtung (5b) und dem Bestimmungsendgerät (1 b).

3. Verfahren nach Anspruch 1 oder 2, **gekennzeichnet durch** die Schritte:
- Bestimmung der IP-Adresse des Ursprungsendgeräts (1a) und des Bestimmungsendgeräts (1 b) und jeweiliges Umsetzen in eine Pseudo-Hardware-Adresse in Abhängigkeit von der Überleiteinrichtung (5), und
- Verbindung eines Eingangs und eines Ausgangs in einer Schaltmatrix (11) in der Systemsteuerung (17) in Übereinstimmung mit der Pseudo-Hardware-Adresse des Ursprungsendgeräts oder des Bestimmungsendgeräts.

4. Verfahren nach Anspruch 3, **dadurch gekennzeichnet, dass**
- die IP-Adresse durch eine Datenflusssteuerungseinheit (18) in der Systemsteuerung (17) in eine Pseudo-Hardware-Adresse umgesetzt wird, und
- übrige Verkehrsabwicklungskapazitäten der ersten und zweiten Überleiteinrichtung (5a; 5b) durch eine Verbindungssteuerung (19) bestimmt werden.

5. Verfahren nach Anspruch 3 oder 4, **dadurch gekennzeichnet, dass**
die Pseudo-Hardware-Adresse dasselbe Format hat wie eine herkömmliche Hardware-Adresse.

6. Verfahren nach einem der Ansprüche 3 bis 5, **dadurch gekennzeichnet, dass**
die Pseudo-Hardware-Adresse als Senderadresse an die Verbindungssteuerung (19) übertragen wird, und über diese Konfigurationsdaten des Ursprungsendgeräts durch die Verbindungssteuerung (19) registriert werden.

7. Systemsteuerung in einer Nebenstellenanlage zum Aufbauen einer IP-Telefonieverbindung zwischen einem Ursprungsendgerät (1a) und einem Bestimmungsendgerät (1 b) unter mehreren Endgeräten (1) in einem IP-Netz (2) über eine von mehreren Überleiteinrichtungen (5) einer Nebenstellenanlage (4), **gekennzeichnet durch**:
- eine Datenflusssteuerungseinheit (18), und
- eine Verbindungssteuerung (19),
wobei die Datenflusssteuerungseinheit (18) und die Verbindungssteuerung (19) Mittel zum Ausführen des Verfahrens nach einem der Ansprüche 1 bis 6 umfassen.

8. Systemsteuerung nach Anspruch 7, **dadurch gekennzeichnet, dass**
die Datenflusssteuerung (18) eine Adressentabelle mit einer Zuordnung zwischen einer IP-Adresse und einer Pseudo-Hardware-Adresse umfasst, wobei die Pseudo-Hardware-Adresse dasselbe Format hat wie eine herkömmliche Hardware-Adresse.

## Revendications

1. Procédé destiné à l'établissement d'une connexion de téléphonie IP entre un terminal d'origine (1a) et un terminal de destination (1 b) parmi plusieurs terminaux (1) dans un réseau IP (2) sur l'une de plusieurs passerelles (5) d'un autocommutateur (4) **caractérisé par** les étapes suivantes :
- établissement d'une connexion entre le terminal d'origine (1a) et une première passerelle (5a), le terminal d'origine (1a) sélectionnant la première passerelle (5a) à partir des plusieurs passerelles (5) au moyen d'une liste d'adresses IP,
- vérification, par une unité de commande de flux de données (18) de l'autocommutateur (4), si la première passerelle (5a) possède des capacités de gestion de trafic de réserve et, si la première passerelle (5a) possède des capacités de gestion de trafic de réserve,
- établissement d'une connexion entre la première passerelle (5a) et le terminal de destination (1 b).

2. Procédé selon la revendication 1, **caractérisé par** les étapes supplémentaires suivantes :
- si on trouve que la première passerelle (5a) ne possède pas des capacités de gestion de trafic de réserve, recherche d'une seconde passerelle (5b) de l'autocommutateur (4) dotée de gestion de trafic de réserve,
- établissement d'une connexion entre la première passerelle (5a) et la seconde passerelle (5b) à travers une commande de système (17) de l'autocommutateur (4), et
- établissement d'une connexion entre la seconde passerelle (5b) et le terminal de destination (1 b).

3. Procédé selon la revendication 1 ou 2, **caractérisé par** les étapes suivantes :
- détermination de l'adresse IP du terminal d'origine (1a) et du terminal de destination (1 b) et conversion respective en une pseudo adresse matérielle en fonction de la passerelle (5) et
- connexion d'une entrée et d'une sortie dans une matrice de commutation (11) dans la commande de système (17) conformément à la pseudo adresse matérielle du terminal d'origine ou du terminal de destination.

4. Procédé selon la revendication 3, **caractérisé en ce que** :
- l'adresse IP est convertie en une pseudo adresse matérielle à travers une unité de commande de flux de données (18) dans la commande de système (17) et
- des capacités de gestion de trafic de réserve des première et seconde passerelles (5a ; 5b) sont déterminées par une commande d'appel (19).

5. Procédé selon la revendication 3 ou 4, **caractérisé en ce que** :
la pseudo adresse matérielle possède le même format qu'une adresse matérielle conventionnelle.

6. Procédé selon l'une quelconque des revendications 3 à 5, **caractérisé en ce que** :
la pseudo adresse matérielle est transmise à la commande d'appel (19) en tant qu'adresse de l'expéditeur et, sur cette dernière, des données de configuration du terminal d'origine sont enregistrées par la commande d'appel (19).

7. Commande de système dans un autocommutateur destinée à établir une connexion de téléphonie IP entre un terminal d'origine (1a) et un terminal de destination (1 b) parmi plusieurs terminaux (1) dans un réseau IP (2) sur l'une de plusieurs passerelles (5) d'un autocommutateur (4) **caractérisée par** :
- une unité de commande de flux de données (18), et
- une commande d'appel (19),
l'unité de commande de flux de données (18) et la commande d'appel (19) comprenant des moyens permettant de mettre en oeuvre le procédé selon l'une quelconque des revendications 1 à 6.

8. Commande de système selon la revendication 7, **caractérisée en ce que** :
la commande de flux de données (18) comprend une table d'adresses dotée d'une attribution entre une adresse IP et une pseudo adresse matérielle, la pseudo adresse matérielle possédant le même format qu'une adresse matérielle conventionnelle.
